# EUROPEAN PATENT SPECIFICATION

(11) **EP 4 461 579 B1**
(45) Date of publication and mention of the grant of the patent: **15.04.2026**
(21) Application number: 24172852.6
(22) Date of filing: 26.04.2024
(51) Int. Cl.: B60L 1/00, E02F 9/20, E02F 9/22, B60L 50/61

(54) **ENERGY RECOVERY SYSTEM FOR A VEHICULAR SYSTEM OF A WORK VEHICLE**
ENERGIERÜCKGEWINNUNGSSYSTEM FÜR EIN FAHRZEUGSYSTEM EINES NUTZFAHRZEUGS
SYSTÈME DE RÉCUPÉRATION D'ÉNERGIE POUR UN SYSTÈME DE VÉHICULE D'UN VÉHICULE DE TRAVAIL

(30) Priority: 12.05.2023 IT 202300009612
(43) Date of publication of application: 13.11.2024
(73) Proprietor: CNH Industrial Italia S.p.A., 10156 Torino (IT)
(72) Inventor: MARTUCCI, Vito, 10156 Turin (IT)
(74) Representative: CNH Industrial IP Department

(56) References cited:
- EP-A1- 2 400 652
- JP-A- 2006 336 848
- KR-A- 20230 008 522
- US-A1- 2015 086 315
- US-B2- 10 161 108
- US-B2- 6 708 787
- US-B2- 8 659 177
- US-B2- 9 598 842

## Description

### TECHNICAL FIELD

The present invention concerns an energy recovery system for a work vehicle.

The present invention finds its preferred, although not exclusive, application in work vehicles such as earth moving machines. Reference will be made to this application by way of example below.

### BACKGROUND OF THE INVENTION

Work vehicles such as earth moving machines use power provided by power sources such as internal combustion engine or electric machines powered by batteries to operate a variety of utilities, as shown for example in EP2400652A1.

Making reference to hydraulic systems of the work vehicle, it is widely known that they are particularly energy consuming. In particular, the energy consumption of such hydraulic system is due to the energy need to carry the pumping means that feed hydraulic fluid at high pressure to operate the work vehicle system.

Due to the increasing need to provide environmentally friendly vehicles, it is felt to improve efficiency of the vehicles by reducing the overall power consumption of the vehicle.

In view of the above, the need is felt to optimize the energetic balance of the work vehicles provided with hydraulic systems in order to reduce the overall power consumption of these latter.

An aim of the present invention is to satisfy the above mentioned needs in a cost-effective and optimized manner.

### SUMMARY OF THE INVENTION

The aforementioned aim is reached by a vehicular system and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is perspective view of work vehicle comprising a vehicular system provided with an energy recovery system according to the invention;
- Figure 2 is perspective view of an exemplarily embodiment of an energy recovery element of the energy recovery system according to the invention;
- Figure 3 is a schematic functional representation of a vehicular system comprising an energy recovery system according to a first embodiment of the invention; and
- Figure 4 is a schematic functional representation of a vehicular system comprising an energy recovery system according to a second embodiment of the invention.

### DETAILED DESCRIPTION OF THE INVENTION

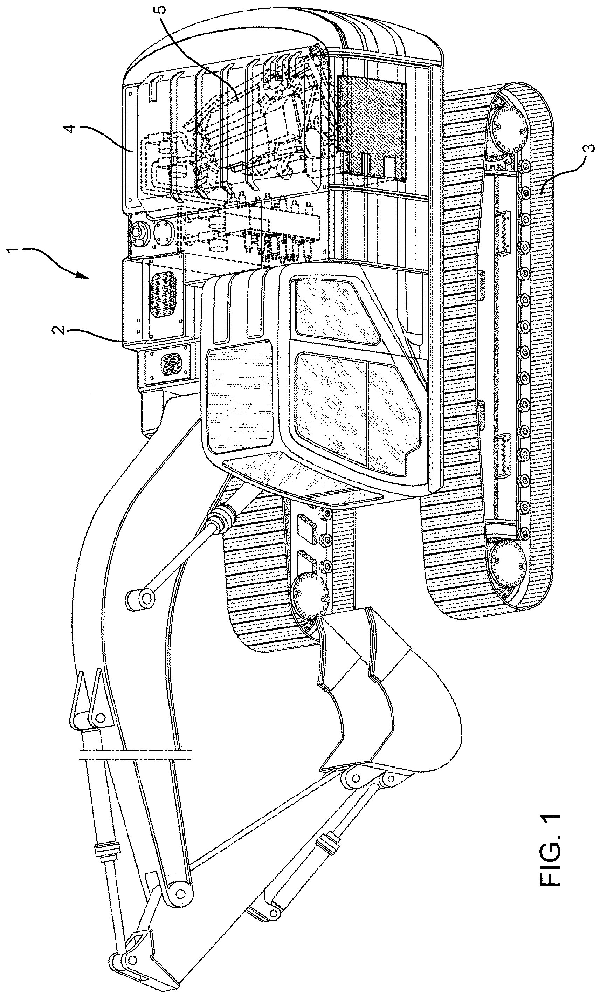

Figure 1 discloses a work vehicle 1 such as an earth moving machine, e.g. a scraper provided, as per se known, with a body 2 configured to move via ground engaging means 3 on ground.

Vehicle 1 comprises a hydraulic arrangement 4 configured to allow operation of different operational elements of the vehicle, such as boom or bucket. The hydraulic arrangement 4 is operated by a torque source 5 such as an internal combustion engine as better described below.

The work vehicle 1 further comprises main energy storing means 6 such as a battery pack, configured to store electrical energy.

The work vehicle then comprises machine systems 7 and service devices 8 electrically connected to the main energy storing means 6 to use the electrical energy stored therein for their operation. Non limitative examples of machine systems 7 comprises the AC/DC converter, ECU, engine controller, solenoid valves while non limitative examples of service devices are the lighting systems, cameras, monitors, 12V connectors, sensor means, phone chargers.

In particular, the main energy storing means 6 are electrically connected to the machine systems 7 via main controller means 6', such as inverter or any other electrical energy controller, in order to control the energy flow between the main energy storing means 6 and machine systems 7.

Work vehicle 1 further comprises an electric machine 9 that is coupled to the torque source 5 and configured to be carried by this latter to generate electrical energy from the torque provide by torque source 5. The electric machine 9 is advantageously electrically connected to the energy main storing means 6 to allow electrical energy exchange.

The hydraulic arrangement 4 comprises essentially pump means 11 configured to pressurize an operative fluid, such as oil, from a tank 12 towards remote systems 13 whose fluid flow is controlled by a valve arrangement 14. Examples of such remote systems 13 are the different actuators, such as cylinders, of the work vehicle.

The pump means 11 are therefore fluidly interposed between a high pressure conduit 15 between the pump means 11 and the valve arrangement 14 towards tank 12 and a low pressure conduit 16 between the tank 12 and the pump means 11.

The hydraulic arrangement 4 further comprises an energy recovery system 20 configured to generate electrical energy from the fluid flowing between pump means 11, valve arrangement 14 and/or tank 12. In detail the energy recovery system 20 is configured to generate electrical energy from the fluid flowing in high pressure conduit 15 or, possibly, in low pressure conduit 17.

The energy recovery system 20 advantageously comprises energy generator means 21 fluidly interposed in parallel to one of conduits of the hydraulic arrangement 4 and in particular interposed on by-pass conduits 22 on high pressure conduit 15. Alternatively, as said, the same arrangement may be realized in low pressure conduit 17.

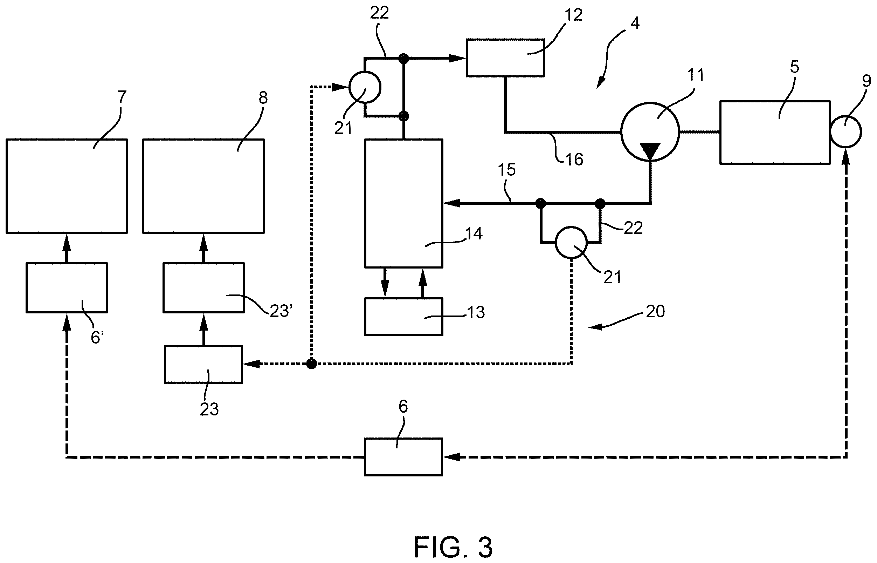

In the embodiment of figure 3, a pair of energy generator means 21 are present upstream and downstream to valve arrangement 14.

The energy recovery system 20 comprises auxiliary energy storing means 23 electrically connected to the energy generator means 21 in order to receive the electrical energy generated by these latter.

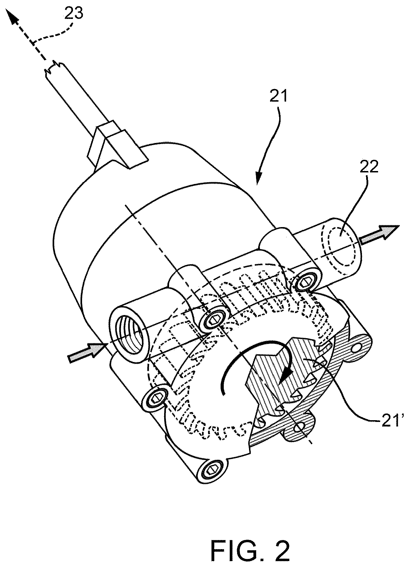

In particular, the energy generation means 21 are integrated into the conduit of the hydraulic arrangement 4. Figure 2 discloses an exemplarily embodiment of such energy generation means 21 comprising a motive element 21' that is carried by an electric machine (not shown) electrically connected to auxiliary energy storing means 23 and housed within the space of conduit 22.

The above-mentioned service devices 8 are connected, preferably via auxiliary controller means 23', such as inverter or any other electrical energy controller, to the auxiliary energy storing means 23.

The operation of the above described first embodiment of the invention is the following.

During the operation of the work vehicle 1, the internal combustion engine/source torque 5 carries the electric machine 9 and the pump means 11. The electric machine 9 generates electrical energy stored in the main energy storing means 6 and used, via supervision of main controller means 6', by machine systems 7 of the work vehicle 1. Pump means 11 provide high pressure fluid towards valve arrangement 14, i.e. to remote systems 13. During such high pressure fluid provision, part of the oil flow passes through bypass conduits 22 and then through energy generation means 21. In this way, electrical energy is generated and collected into auxiliary energy storing means 23 and used, via supervision of auxiliary controller means 23', by service devices 8 of the work vehicle 1.

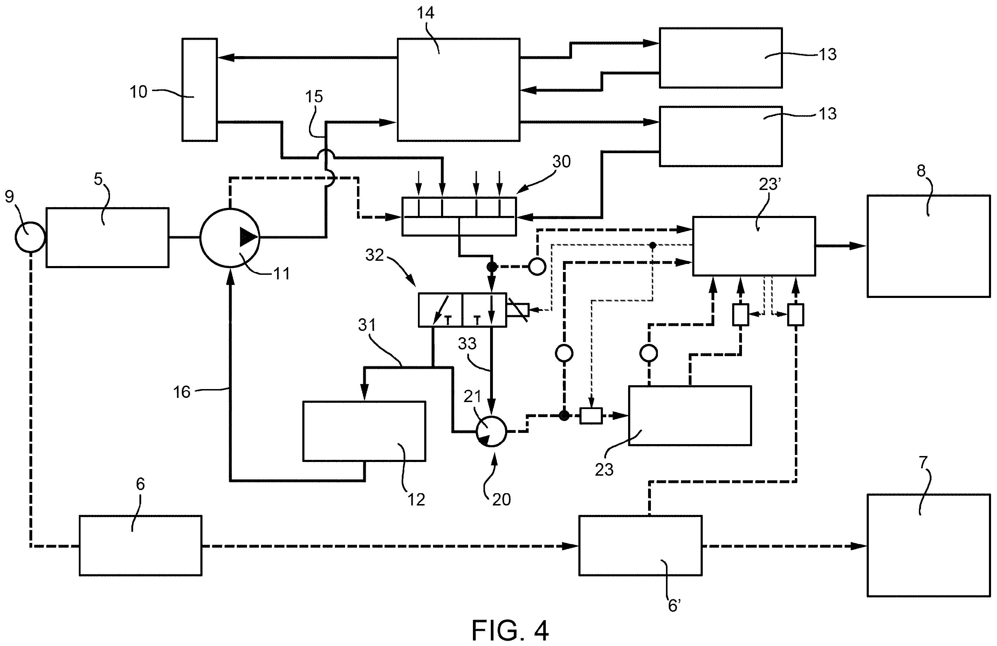

In the embodiment of figure 4, the above described vehicular system differs in that the main and auxiliary controllers 6' and 23' are electrically connected one with the other thereby allowing possible electric energy exchange between the elements connected to these latter.

Moreover, the hydraulic arrangement 4 comprises a collector 30 configured to collect all discharges to remote systems 13 of the work vehicle 1.

The collector 30 is fluidly connected to tank 12 via a conduit 31 and the hydraulic arrangement 4 further comprises valve means 32 configured to selectively allow direct fluid connection of collector 30 to tank 12 via conduit 31 or connection via a parallel conduit 33 and energy generation means 21 fluidly interposed on such parallel conduit.

In particular, therefore, valve means 32 are configured to allow at least two limit configurations, a first limit configuration wherein the collector 30 is isolated from energy generation means 21 and all fluid flow passes via conduit 31 to tank 12 and a second limit configuration wherein all fluid flow passes via parallel conduit 33 through energy generation means 21 to tank 12.

In the shown embodiment, valve means 32 are three ways two positions valve, preferably an electrically controlled valve.

In particular, valve means 32 are controlled by a signal provided by one of the controller means 6', 23', and in the shown embodiment by the auxiliary controller means 23' that are therefore provided with elaboration means configured to collect and elaborate data to provide a control signal for controlling valve means 32.

In further detail, the control signal provided by auxiliary controller means 23' is elaborated on the base of sensor data retrieved by sensor means provided into the vehicular system and configured to collect at least one among the following parameters:
- Pressure of the flow of fluid coming from collector 30;
- Error signal related to an anomaly of operation of energy generation means 21 such as a mechanical lock or an abnormal temperature;
- Temperature or state of charge of auxiliary energy storage means 23; and
- Required energy by service devices 8.

The operation of the above described second embodiment of the invention is the following.

During the operation of the work vehicle 1, the internal combustion engine/source torque 5 carries the electric machine 9 and the pump means 11. The electric machine 9 generates electrical energy stored in the main energy storing means 6 and used, via supervision of main controller means 6', by machine systems 7 of the work vehicle 1. Return fluid from remote devices 13 is collected into collector 30 and then sent into tank 12 directly or via interposition of energy generation means 21 according to the control signal provided by auxiliary controller means 23' to valve means 32. If energy is generated, then it can be stored, as in the previous embodiment, in the auxiliary energy storage means 23 and used by service devices 8. According to data retrieved by sensor means listed above, the auxiliary controller means 23' may change the status of actuation of valve means 32. If needed, furthermore, controller means 23' and 6' may allow energy passage directly between main energy storage means 6 and service devices 8.

In view of the above, the present invention further relates to a control method for controlling an energy generation system in a vehicular system as described in the above second embodiment and comprising the following steps:
i. Receiving parameters related to the operation of the elements of the vehicular system;
ii. Elaborating parameters retrieved at step i) to determine a quantity of electrical energy to be produced by energy generation means (21);
iii. Associating the quantity of electrical energy to a value of flow to of fluid to be provided to energy generation means (21);
iv. Elaborating a control signal related to the flow value elaborated at step iii) to control valve means (32).

In particular, as said, the aforementioned parameters comprise at least one among:
- Pressure of the flow of fluid coming from collector 30;
- Error signal related to an anomaly of operation of energy generation means 21 such as a mechanical lock or an abnormal temperature;
- Temperature or state of charge of auxiliary energy storage means 23; and
- Required energy by service devices 8.

The above-mentioned steps may be executed by one of the controller means 23', 6' comprising elaboration means configured to retrieved the sensor means data and allow their elaboration.

In view of the foregoing, the advantages of a vehicular systema and a work vehicle according to the invention are apparent.

Thanks to the proposed energy generation means it is possible to recovery part of the energy wasted during the fluid motion in the hydraulic circuit.

Furthermore, the energy recovered by the above energy generation means can be used to fed service devices without using the energy of main energy storing means.

In this way the load consumed by electric machine carried by torque source is reduced and then it is reduced the vehicular fuel consumption.

Moreover, in the embodiment provided with the collector and valve means it is possible to selectively allow or exclude the energy generation means according to vehicle need and operation.

Accordingly, the proposed vehicular system is further versatile. Such versatility is moreover increased thanks to electrical connection between auxiliary and main energy storing means.

It is clear that modifications can be made to the described vehicular systema and a work vehicle which do not extend beyond the scope of protection defined by the claims.

Clearly number and positioning of energy generators and their typology may differ with respect to the described and shown one.

Similarly the controller typology and number may vary according to the peculiar need of the vehicular system.

Furthermore, sensor data used for elaborating the control signal for actuating valve means may differ with respect to the described one.

## Claims

1. Vehicular system for a work vehicle (1), said vehicular system comprising:
- a torque source (5);
- an electric machine (9) carried by said torque source (5) and configured to generate electrical energy in function of the torque provided by said torque source (5),
- main energy storing means (6) electrically connected to said electric machine (9) and configured to store electrical energy produced by this latter;
- a hydraulic arrangement (4) comprising pump means (11) carried by said torque source (5), a valve arrangement (14) and a tank (12) fluidly connected to said pump means (11), said valve arrangement (14) allowing the fluidic connection of remote systems (13) of said work vehicle (1) to said tank (12) and said pump means (11),
said vehicular system comprising an energy recovery system (20) configured to generate electrical energy from the movement of the fluid flowing between pump means (11), valve arrangement (14) and/or tank (12); and
said vehicular system is **characterized in that** it further comprises a collector (30) fluidly interposed between said remote systems (13) of said work vehicle (1) and said tank (12) and configured to collect the discharge of said remote systems (13), said energy recovery system (20) being selectively fluidly interposed between said collector (30) and said tank (12).

2. Vehicular system according to claim 1, wherein said pump means (11) are connected to said valve arrangement (14) and to said tank (12) via a high pressure conduit (15), said energy recovery system (20) being configured to generate electrical energy from the movement of the fluid flowing into said high pressure conduit (15).

3. Vehicular system according to claim 1, wherein said energy recovery system (20) comprises energy generation means (21) fluidly interposed in parallel to one of conduits of hydraulic arrangement (4).

4. Vehicular system according to claim 3, wherein said energy generation means (21) are integrated into said conduit.

5. Vehicular system according to claim 3, wherein said energy recovery system (20) further comprises auxiliary energy storing means (23) electrically connected to said energy generation means (21) and configured to store electrical energy produced by these latter.

6. Vehicular system according to claim 5, wherein said auxiliary energy storing means (23) are electrically connected to service devices (8) of said work vehicle (1) and wherein said main energy storing means (6) are electrically connected to machine systems (7) of said work vehicle (1).

7. Vehicular system according to claim 5, wherein said auxiliary energy storing means (23') are electrically connected to said main energy storing means (6).

8. Vehicular system according to claim 1, further comprising valve means (32) configured to selectively allow direct fluid connection of said collector (30) to said tank (12) via a conduit (31) or connection via a parallel conduit (33) wherein energy generation means (21) are fluidly interposed therethrough.

9. Vehicular system according to claim 8, wherein said valve means (32) comprise an electric controlled valve.

10. Vehicular system according to claim 9, wherein said valve means (32) are controlled by a control signal elaborated on the parameters related to the operation of the elements of said vehicular system.

11. Vehicular system according to claim 10, wherein said parameters comprises at least one among:
• Data retrieved from sensor means configured to detect pressure of the flow of fluid coming from said collector (30);
• Data retrieved from sensor means configured to detect to an anomaly of operation of energy generation means (21);
• Data retrieved from sensor means configured to detect temperature or state of charge of said auxiliary energy storage means (23); and
• Energy request retrieved by said service devices (8).

12. Vehicular system according to claim 10 or 11, comprising an electronic control unit provided with elaboration means configured to acquire said parameters and elaborate said control signal for said valve means (32).

13. Vehicular system according to claim 12, wherein said main and auxiliary storing means (6, 23) are controlled by respective main and auxiliary controller means (6', 23'), said electronic control unit being one between said main and auxiliary controller means (6', 23').

14. Control method for controlling an energy generation system (20) in a vehicular system as claimed in claim 12 and comprising the following steps:
v. Receiving parameters related to the operation of the elements of said vehicular system;
vi. Elaborating parameters retrieved at step i) to determine a quantity of electrical energy to be produced by energy generation means (21);
vii. Associating the quantity of electrical energy to a value of flow to of fluid to be provided to energy generation means (21);
viii. Elaborating a control signal related to the flow value elaborated at step iii) to control said valve means (32).

15. Work vehicle (1) comprising a vehicular system according to any of claims 1 to 13.

## Patentansprüche

1. Fahrzeugsystem für ein Arbeitsfahrzeug (1), wobei das Fahrzeugsystem umfasst:
• eine Drehmomentquelle (5);
• eine elektrische Maschine (9), die von der Drehmomentquelle (5) getragen wird und dazu eingerichtet ist, elektrische Energie in Abhängigkeit von dem von der Drehmomentquelle (5) bereitgestellten Drehmoment zu erzeugen;
• Hauptenergiespeichermittel (6), die elektrisch mit der elektrischen Maschine (9) verbunden sind und dazu eingerichtet sind, die von dieser erzeugte elektrische Energie zu speichern;
• eine hydraulische Anordnung (4), umfassend eine Pumpvorrichtung (11), die von der Drehmomentquelle (5) getragen wird, eine Ventilanordnung (14) und einen Tank (12), der fluidisch mit der Pumpvorrichtung (11) verbunden ist, wobei die Ventilanordnung (14) die fluidische Verbindung von entfernten Systemen (13) des Arbeitsfahrzeugs (1) mit dem Tank (12) und der Pumpvorrichtung (11) ermöglicht,
wobei das Fahrzeugsystem ein Energierückgewinnungssystem (20) umfasst, das dazu eingerichtet ist, elektrische Energie aus der Bewegung des Fluids zu erzeugen, das zwischen Pumpvorrichtung (11), Ventilanordnung (14) und/oder Tank (12) fließt; und
wobei das Fahrzeugsystem **dadurch gekennzeichnet ist, dass** es weiterhin einen Kollektor (30) umfasst, der fluidisch zwischen den entfernten Systemen (13) des Arbeitsfahrzeugs (1) und dem Tank (12) angeordnet ist und dazu eingerichtet ist, den Ablass der entfernten Systeme (13) aufzunehmen, wobei das Energierückgewinnungssystem (20) wahlweise fluidisch zwischen dem Kollektor (30) und dem Tank (12) angeordnet ist.

2. Fahrzeugsystem nach Anspruch 1, wobei die Pumpvorrichtung (11) über eine Hochdruckleitung (15) mit der Ventilanordnung (14) und mit dem Tank (12) verbunden ist, wobei das Energierückgewinnungssystem (20) dazu eingerichtet ist, elektrische Energie aus der Bewegung des Fluids zu erzeugen, das in die Hochdruckleitung (15) fließt.

3. Fahrzeugsystem nach Anspruch 1, wobei das Energierückgewinnungssystem (20) Energieerzeugungsmittel (21) umfasst, die fluidisch parallel zu einer der Leitungen der hydraulischen Anordnung (4) angeordnet sind.

4. Fahrzeugsystem nach Anspruch 3, wobei die Energieerzeugungsmittel (21) in die genannte Leitung integriert sind.

5. Fahrzeugsystem nach Anspruch 3, wobei das Energierückgewinnungssystem (20) weiterhin Hilfsenergiespeichermittel (23) umfasst, die elektrisch mit den Energieerzeugungsmitteln (21) verbunden sind und dazu eingerichtet sind, von diesen erzeugte elektrische Energie zu speichern.

6. Fahrzeugsystem nach Anspruch 5, wobei die Hilfsenergiespeichermittel (23) elektrisch mit Servicevorrichtungen (8) des Arbeitsfahrzeugs (1) verbunden sind und wobei die Hauptenergiespeichermittel (6) elektrisch mit Maschinensystemen (7) des Arbeitsfahrzeugs (1) verbunden sind.

7. Fahrzeugsystem nach Anspruch 5, wobei die Hilfsenergiespeichermittel (23') elektrisch mit den Hauptenergiespeichermitteln (6) verbunden sind.

8. Fahrzeugsystem nach Anspruch 1, weiterhin umfassend Ventilmittel (32), die dazu eingerichtet sind, wahlweise eine direkte Fluidverbindung des Kollektors (30) mit dem Tank (12) über eine Leitung (31) zu ermöglichen oder eine Verbindung über eine parallele Leitung (33), in der die Energieerzeugungsmittel (21) fluidisch angeordnet sind.

9. Fahrzeugsystem nach Anspruch 8, wobei die Ventilmittel (32) ein elektrisch gesteuertes Ventil umfassen.

10. Fahrzeugsystem nach Anspruch 9, wobei die Ventilmittel (32) durch ein Steuersignal gesteuert werden, das auf der Grundlage von Parametern, die sich auf den Betrieb der Elemente des Fahrzeugsystems beziehen, erstellt ist.

11. Fahrzeugsystem nach Anspruch 10, wobei die Parameter zumindest einen der folgenden umfassen:
• Daten, die von Sensormitteln abgerufen werden, die dazu eingerichtet sind, den Druck des Fluidstroms aus dem Kollektor (30) zu erfassen;
• Daten, die von Sensormitteln abgerufen werden, die dazu eingerichtet sind, eine Betriebsanomalie der Energieerzeugungsmittel (21) zu erfassen;
• Daten, die von Sensormitteln abgerufen werden, die dazu eingerichtet sind, eine Temperatur oder einen Ladezustand der Hilfsenergiespeichermittel (23) zu erfassen; und
• Energiebedarf, der von den Servicevorrichtungen (8) abgerufen wird.

12. Fahrzeugsystem nach Anspruch 10 oder 11, umfassend eine elektronische Steuereinheit, die mit Verarbeitungseinrichtungen ausgestattet ist, die dazu eingerichtet sind, die Parameter zu erfassen und das Steuersignal für die Ventilmittel (32) zu erstellen.

13. Fahrzeugsystem nach Anspruch 12, wobei die Haupt- und Hilfsenergiespeichermittel (6, 23) durch jeweilige Haupt- und Hilfssteuerungsmittel (6', 23') gesteuert werden, wobei die elektronische Steuereinheit eines der Haupt- oder Hilfssteuerungsmittel (6', 23') ist.

14. Steuerverfahren zum Steuern eines Energieerzeugungssystems (20) in einem Fahrzeugsystem nach Anspruch 12, umfassend die Schritte:
v. Empfangen von Parametern, die sich auf den Betrieb der Elemente des Fahrzeugsystems beziehen;
vi. Verarbeiten der in Schritt i) abgerufenen Parameter, um eine Menge der von den Energieerzeugungsmitteln (21) zu erzeugenden elektrischen Energie zu bestimmen;
vii. Zuordnen der Menge elektrischer Energie zu einem Wert des Flüssigkeitsstroms, der den Energieerzeugungsmitteln (21) bereitzustellen ist;
viii. Erstellen eines Steuersignals in Bezug auf den in Schritt iii) ermittelten Durchflusswert zum Steuern der Ventilmittel (32).

15. Arbeitsfahrzeug (1), umfassend ein Fahrzeugsystem nach einem der Ansprüche 1 bis 13.

## Revendications

1. Système véhiculaire pour un véhicule de travail (1), ledit système véhiculaire comprenant :
- une source de couple (5) ;
- une machine électrique (9) soutenue par ladite source de couple (5) et configurée pour générer de l'énergie électrique en fonction du couple fourni par ladite source de couple (5) ;
- des moyens principaux d'accumulation d'énergie (6) raccordés électriquement à ladite machine électrique (9) et configurés pour emmagasiner l'énergie électrique produite par cette dernière ;
- un dispositif hydraulique (4) comprenant des moyens de pompage (11) soutenu par ladite source de couple (5), un ensemble de vannes (14) et un réservoir (12) raccordé fluidiquement auxdits moyens de pompage (11), ledit ensemble de vannes (14) permettant le raccordement fluidique de systèmes distants (13) dudit véhicule de travail (1) audit réservoir (12) et auxdits moyens de pompage (11),
ledit système véhiculaire comprenant un système de récupération d'énergie (20) configuré pour générer de l'énergie électrique à partir du mouvement du fluide s'écoulant entre les moyens de pompage (11), l'ensemble de vannes (14) et/ou le réservoir (12) ; et
ledit système véhiculaire est **caractérisé en ce qu'**il comprend en outre un collecteur (30) interposé fluidiquement entre lesdits systèmes distants (13) dudit véhicule de travail (1) et ledit réservoir (12) et configuré pour collecter la décharge desdits systèmes distants (13), ledit système de récupération d'énergie (20) étant interposé fluidiquement et de manière sélective entre ledit collecteur (30) et ledit réservoir (12).

2. Système véhiculaire selon la revendication 1, dans lequel lesdits moyens de pompage (11) sont raccordés audit ensemble de vannes (14) et audit réservoir (12) par l'intermédiaire d'un conduit haute pression (15), ledit système de récupération d'énergie (20) étant configuré pour générer de l'énergie électrique à partir du mouvement du fluide s'écoulant dans ledit conduit haute pression (15).

3. Système véhiculaire selon la revendication 1, dans lequel ledit système de récupération d'énergie (20) comprend des moyens de production d'énergie (21) interposés fluidiquement et en parallèle entre l'un des conduits du dispositif hydraulique (4).

4. Système véhiculaire selon la revendication 3, dans lequel lesdits moyens de production d'énergie (21) sont intégrés audit conduit.

5. Système véhiculaire selon la revendication 3, dans lequel ledit système de récupération d'énergie (20) comprend en outre des moyens auxiliaires d'accumulation d'énergie (23) raccordés électriquement auxdits moyens de production d'énergie (21) et configurés pour emmagasiner l'énergie électrique produite par ces derniers.

6. Système véhiculaire selon la revendication 5, dans lequel lesdits moyens auxiliaires d'accumulation d'énergie (23) sont raccordés électriquement à des dispositifs de service (8) dudit véhicule de travail (1) et dans lequel lesdits principaux moyens d'accumulation d'énergie (6) sont raccordés électriquement à des systèmes de machines (7) dudit véhicule de travail (1).

7. Système véhiculaire selon la revendication 5, dans lequel lesdits moyens auxiliaires d'accumulation d'énergie (23') sont raccordés électriquement auxdits principaux moyens d'accumulation d'énergie (6)

8. Système véhiculaire selon la revendication 1, comprenant en outre des moyens de régulation (32) configurés pour permettre de manière sélective un raccordement de fluide direct dudit collecteur (30) audit réservoir (12) par l'intermédiaire d'un conduit (31) ou à un raccordement par l'intermédiaire d'un conduit parallèle (33) à travers lequel des moyens de production d'énergie (21) sont interposés fluidiquement.

9. Système véhiculaire selon la revendication 8, dans lequel lesdits moyens de régulation (32) comprennent une vanne à commande électrique.

10. Système véhiculaire selon la revendication 9, dans lequel lesdits moyens de régulation (32) sont commandés par un signal de commande élaboré à partir des paramètres liés au fonctionnement des éléments dudit système véhiculaire.

11. Système véhiculaire selon la revendication 10, dans lequel lesdits paramètres comprennent au moins l'un parmi :
• des données récupérées à partir de moyens de détection configurés pour détecter la pression du flux de fluide provenant dudit collecteur (30) ;
• des données récupérées à partir de moyens de détection configurés pour détecter une anomalie de fonctionnement des moyens de production d'énergie (21) ;
• des données récupérées à partir de moyens de détection configurés pour détecter la température ou l'état de charge desdits moyens auxiliaires d'accumulation d'énergie (23) ; et
• une demande d'énergie récupérée par lesdits dispositifs de service (8).

12. Système véhiculaire selon la revendication 10 ou la revendication 11, comprenant une unité de commande électronique équipée de moyens d'élaboration configurés pour acquérir lesdits paramètres et élaborer ledit signal de commande pour lesdits moyens de régulation (32).

13. Système véhiculaire selon la revendication 12, dans lequel lesdits moyens principaux et auxiliaires d'accumulation d'énergie (6, 23) sont commandés par des moyens principaux et auxiliaires de commande respectifs (6', 23'), ladite unité de commande électronique étant l'un parmi lesdits moyens de commande principaux et auxiliaires (6', 23').

14. Procédé de commande pour commander un système de production d'énergie (20) dans un système véhiculaire selon la revendication 12 et comprenant les étapes suivantes :
v. la réception des paramètres liés au fonctionnement des éléments dudit système véhiculaire ;
vi. l'élaboration des paramètres récupérés à l'étape i) afin de déterminer une quantité d'énergie électrique à produire à l'aide des moyens de production d'énergie (21) ;
vii. l'association de la quantité d'énergie électrique à une valeur de débit de fluide à fournir aux moyens de production d'énergie (21) ;
viii. l'élaboration d'un signal de commande lié à la valeur de débit élaborée à l'étape iii) afin de commander lesdits moyens de régulation (32).

15. Véhicule de travail (1) comprenant un système véhiculaire selon l'une quelconque des revendications 1 à 13.
